# EUROPEAN PATENT SPECIFICATION

(11) **EP 1 819 943 B1**
(45) Date of publication and mention of the grant of the patent: **14.05.2008**
(21) Application number: 05811290.5
(22) Date of filing: 29.11.2005
(51) Int. Cl.: F16H 3/093

(54) **TWIN LAYSHAFT MANUAL TRANSMISSION**
HANDGETRIEBE MIT DOPPELVORGELEGEWELLE
TRANSMISSION MANUELLE AVEC ARBRE INTERMEDIAIRE DOUBLE

(30) Priority: 29.11.2004 GB 0426165
(43) Date of publication of application: 22.08.2007
(73) Proprietor: RICARDO UK LIMITED, Shoreham-by-Sea, West Sussex BN43 5FG (GB)
(72) Inventor: BURKE, John Pius, Leamington Spa, Warwickshire CV31 1UD (GB); SEDGWICK, Geoffrey Colin, Powys LD1 5NT (GB)
(74) Representative: Chettle, Adrian John
(86) International application number: PCT/GB2005/004568
(87) International publication number: WO 2006/056804

(56) References cited:
- EP-A- 0 969 225
- WO-A-20/05068875
- DE-A1- 4 422 901
- DE-A1- 10 141 309
- DE-A1- 10 145 790
- DE-A1- 10 154 955
- US-A- 4 565 106
- PATENT ABSTRACTS OF JAPAN vol. 007, no. 193 (M-238), 24 August 1983 (1983-08-24) & JP 58 094658 A (TOYOTA JIDOSHA KOGYO KK), 4 June 1983 (1983-06-04)

## Description

This invention relates to a manually operated twin layshaft gear transmission, particularly suitable for front-wheel drive vehicles. EP-A-969225 discloses a transmissing having the features of the preamble of claim 1.

Most front-wheel drive vehicles have a transversely mounted engine and transmission for reasons of cost and design efficiency. Almost universally, the transmission is end mounted on the engine, and accordingly it is desirable to minimize the axial length so as not to impede suspension and steering components.

However, in order to improve driveability and fuel efficiency of the vehicle, it is also desirable to increase the number of speed ratios. Generally speaking each extra ratio requires another pair of gears, and tends to increase the overall axial length of the transmission.

It has been proposed to utilize twin layshafts in place of a conventional single layshaft. Such a twin arrangement can allow a shorter axial length at the expense of greater transmission width; however a dedicated gear pair is still provided for each speed ratio.

It has also been proposed to utilize a so-called 'multipath' arrangement whereby one or more gear pairs may form part of the torque path of two distinct speed ratios. However in such arrangements, the individual speed ratios are not freely selectable as is the case where separate gear pairs are provided for each speed ratio. Inevitably a compromise must be reached because the gears which are used more than once will determine the available step between those ratios.

Furthermore, there are difficulties of gear diameter, width, torque capacity and tooth overlap to take into account. Accordingly not all theoretical gear arrangements have practical use. Yet another problem is the requirement to provide a reverse speed ratio.

According to the invention there is provided a twin layshaft gear transmission comprising an input shaft, twin layshafts parallel to the input shaft, an output member driven by said layshafts, a plurality of fast and loose gears between the shafts, and selectors adapted to engage loose gears on demand, wherein
a) a fixed gear and a plurality of loose gears is provided on the input shaft, the loose gears being selectively engageable with said input shaft;
b) a loose gear is provided on a first layshaft, selectively engageable with said first layshaft and meshed with a loose gear of said input shaft;
c) two loose gears are provided on a second layshaft, each loose gear being selectively engageable with said second layshaft and meshed with a respective loose gear of said input shaft;
d) the first layshaft having a loose output gear, and the second layshaft having a fixed output gear, the output gears being adapted to drive said output member and the loose output gear being selectively engageable with said first layshaft; and
e) each layshaft having a loose transfer gear connected to the fixed gear of said input shaft, said transfer gears being selectively engageable with the respective first and second layshafts.

Such an arrangement provides a compact transmission having a high number of forward speed ratios which are engageable sequentially.

Preferably the loose gears of the input shaft are a cluster, and thus fixed for relative rotation together. In a preferred embodiment the loose transfer gears are respectively engageable directly with the first layshaft, and with a loose gear of the second layshaft.

In a preferred embodiment the cluster comprises two or more gears, one of which drives via an idler to an additional loose gear of the first layshaft, the additional loose gear being selectively engageable with the first layshaft to provide reverse.

In a preferred forward and reverse embodiment, the transmission has four single acting selectors and two double acting selectors, one double acting selector being provided on each of said layshafts. Preferably a double acting selector is movable to engage reverse ratio.

In the preferred embodiment one gear of the cluster drives loose gears of both layshafts. The gears of the cluster are of different diameter. Another gear of the cluster may drive both forward and reverse ratios, and in the preferred embodiment this gear drives to both first and second layshafts. In a three gear cluster, the smallest gear is preferably at the centre, and the largest gear drives two loose gears of the layshafts. The smallest cluster gear is preferably part of the reverse gear train.

In the preferred embodiment the transfer gears of the layshafts are the same diameter.

A transmission according to the invention can provide 9 forward speed ratios from 10 gear wheels and seven selectors, exclusive of an output gear on the output member. Such output gear is typically the drive gear of the carrier of a differential gear assembly. Provision of reverse gear requires two additional gear wheels and one additional selector, provided that one existing gear wheel is an input for both reverse and one forward speed ratio. Provision of three additional gear wheels allows a fully independent choice of reverse gear ratio.

Preferably the layshaft output gears are adapted to be adjacent input end of the input shaft, and thus in use towards the vehicle centre line in a front wheel drive transmission.

Preferably the double acting selectors of the preferred embodiment are both adjacent the layshaft output gears, the single acting selectors all being outboard thereof with respect to the input end of the input shaft.

In one embodiment, a selector of the transfer gear of the first layshaft is outboard of the associated gear at the outboard end of the transmission. Such an arrangement is optional, but can provide a very short transmission with an axial bulge to accommodate the outboard selector. Although the bulge increases overall length, it can be positioned on either layshaft axis, or rotated about the axis of the input shaft so as to be best accommodated within the engine bay of a front wheel drive vehicle.

In the preferred arrangement, the input shaft is adapted to be on the centre line of the engine crankshaft and driven via a single dry plate clutch. In one arrangement the rotational axes of the layshafts are on a line generally orthogonal to a line between the rotational axes of the input shaft and the output member.

A transmission according to the invention can provide a reduction in noise. Typically in a conventional transmission, each pair of gears is in mesh in neutral, and will generate a degree of noise and/or vibration. In a transmission according to the invention only two pairs of gears are in mesh in neutral, and thus the noise and vibration generated can be reduced at idle.

Inevitably, because the transmission is multi-path, some speed ratios require more than two gear pairs in mesh. In a preferred embodiment, the number of such multi-path ratios is equal to or less than the number of simple path ratios. In one preferred embodiment the multi-path ratios are 1^{st}, 3^{rd}, 6^{th} and reverse, whereas the simple path ratios are 2^{nd}, 4^{th}, 5^{th} and 7^{th}.

Other features of the invention will be apparent from the following description of a preferred embodiment shown by way of example only in the accompanying drawings in which:-
Fig.1 is a developed schematic view of an embodiment of the invention;
Fig.2 is a shift point graph for the embodiment of Fig. 1;
Fig. 3 is a view corresponding to Fig. 1 of an alternative arrangement;
Fig. 4 is a shift point graph for the embodiment of Fig. 3 adapted to a petrol engine; and
Fig. 5 is a shift point graph for the embodiment of Fig. 3 adapted to a diesel engine.

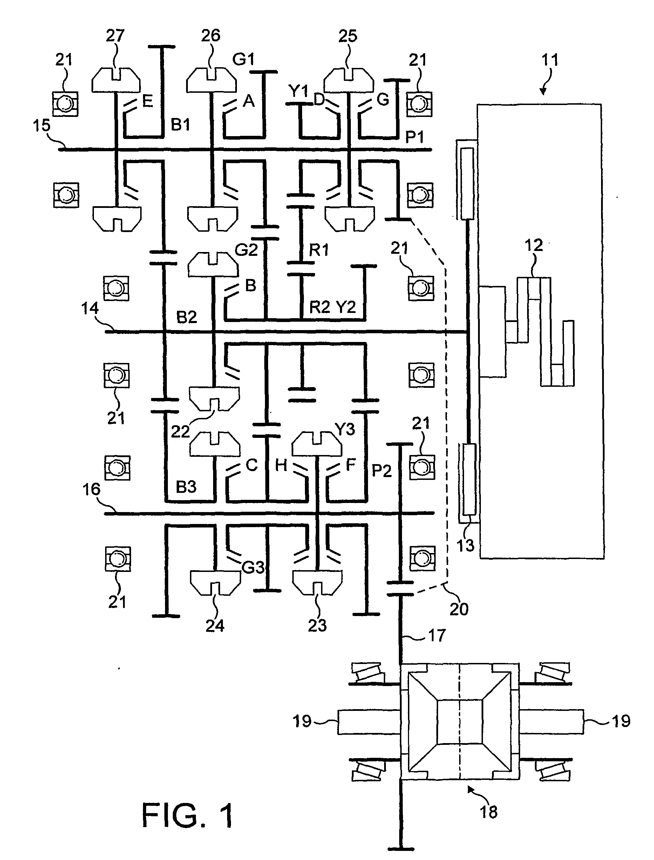

Fig. 1 illustrates a preferred embodiment of the invention. An engine 11 having a crankshaft 12 drives via a single dry plate clutch 13, the input shaft 14 of a gear transmission. Two layshafts 15,16 are provided, and have axes of rotation parallel to that of the input shaft 14. The layshafts 15,16 each drive out to the drive gear 17 of a differential gear 18, having oppositely directed drive shafts 19 for the front wheels of a vehicle.

It will be appreciated that the layshafts and input shaft are illustrated in a common plane for simplicity, whereas in practice the axes will be arranged in a triangle. Connection of the upper layshaft 15 to the final drive gear 17 is represented by dotted line 20. Suitable rolling element bearings 21 are provided for the layshafts and input shaft.

The input shaft 14 has a gear cluster 21 freely rotatable thereon, and selectively engageable therewith via a conventional single acting selector hub 22. It will be appreciated that, as illustrated, the hub is disconnected. A shift of the hub rightwards will initially engage a speed equalising device and finally a corresponding dog clutch. Further explanation of the operation of the selector hub is not required; suitable arrangements (such as synchromesh) will be known to be the suitably skilled person.

At the remote end of the input shaft 14 is provided a fixed gear B2.

The upper layshaft 15, as viewed, has at the engine end a loose output gear P1 in engagement with the final drive gear 17. The lower layshaft 16 has a fixed output gear P2 also in engagement with the final drive gear 17.

The lower layshaft 16 has at the engine end a loose gear Y3 coupled to gear Y2 of the gear cluster, and towards the remote end a loose gear G3 coupled to gear G2 of the cluster. A double acting selector hub 23 is shiftable to the left or to the right to couple either gear Y3 or gear G3 to the layshaft 16.

At the remote end of the layshaft 16, a free gear B3 is engaged with fixed gear B2. The gear B3 is engageable with gear G3 via a single acting selector hub 24.

The upper layshaft 15 has at the engine end a loose gear Y1 coupled via idler gear R1 to middle gear R2 of the gear cluster. The gear train R2, R1, Y1 provides a reverse ratio.

Double acting selector hub 25 is shiftable to the left and to the right to engage layshaft 15 with either output gear P1 or reversing gear Y1.

Towards the remote end, layshaft 15 carries loose gear G1 in engagement with cluster gear G2. A single acting selector hub 26 is provided to couple layshaft 15 and gear G1 on demand. It will be appreciated that gears G1, G2, G3 are in constant mesh.

At the remote end of layshaft 15 is provided loose gear B 1 which is engaged with gear B2, and can be coupled to layshaft 15 by single acting selector hub 27. It will be appreciated that gears B1, B2, B3 are in constant mesh.

In order to best understand torque flows through the transmission, the relevant selector clutches are labelled by letter. Thus double acting selectors 23,25 have respective clutches D or G, and H or F. Single acting selectors, 22,24,26,27 have respective clutches B , C, A and E.

In operation a suitable sequence operable to give seven forward speed ratios is as follows:

| **Speed** | **Selectors Engaged** | **Gear pairs under load** |
|---|---|---|
| 1 | EAF | 4 |
| 2 | BF | 2 |
| 3 | CAG | 4 |
| 4 | EG | 2 |
| 5 | CH | 2 |
| 6 | EAH | 4 |
| 7 | BAG | 2 |

Such ratios are usable with a typical final drive ratio of around 3-7:1, and suitable for a conventional internal combustion engine. The ratios can be spread in a suitable manner between about 17:1 for first gear and 2-5:1 for seventh gear. In particular the transmission can provide spread of ratios which smoothly fits within a range of engine speed of say 4000-6000 rpm, and which has a slightly increasing lower engine rpm as each upchange is selected from the upper engine rpm.

Reverse ratio is provided by engaging selectors EDF. Additional super low and super high ratios may be provided by respectively engaging selector hubs CF and BH.

The number of gear pairs under load is an important factor in determining overall efficiency; in the example given 7^{th} speed has only two gear pairs under load and is thus relatively efficient. Furthermore the super high ratio (BH) also has only two gear pairs under load.

In use movement of the selector hubs is typically by electric actuator, each hub being resiliently biased to a rest condition in which the hub is disengaged. The electric actuators (or equivalent) may be arranged to operate sequentially in order to ensure smooth selection of the next ratio. Although it is envisaged that sequential selection of speed ratios will occur, the transmission can make any desired ratio change on demand.

A transmission according to the invention provides a large number of forward ratios within a very short overall length, and is thus highly suitable for use in small vehicles.

Such a transmission is also relatively inexpensive because the number of gear wheels is less than the number of a conventional transmission having multiple single paths.

One reverse ratio is described (selectors EDF). However it will be clear that several reverse ratios are available using other selector combinations; these are however not likely to be utilised in a car transmission because only one reverse ratio is usually necessary.

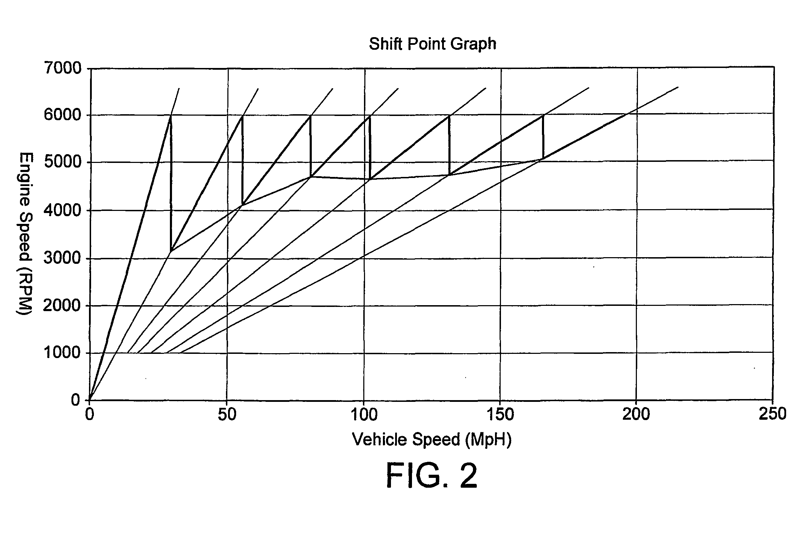

Fig.2 is a shift point graph showing how the seven forward ratios of the preferred embodiment provide ratio steps which increase in a progressive manner, and give the desirable slight increase in engine speed at each upshift at maximum engine rpm. As illustrated maximum rpm is illustrated at 6000, but the effect is the same if the upshift is consistently at a higher or lower figure.

Not all transmission arrangements give usable or useful ratios at each upchange. Fig.2 shows how the transmission according to the invention can accommodate a relatively narrow power band at higher ratios, without any awkward ratios to frustrate a smooth driving style. Such an awkward ratio change might occur if for example two adjacent ratios were too close together, or too far apart. In the former case the driver would tend to avoid the ratio because of the need to make several rapid changes; in the latter case engine speed would drop too much on an up change and could disrupt smooth acceleration.

In the preferred embodiment the ratios provided are:

| **Speed** | **Speed Ratio** |
|---|---|
| 1 | 17.08 |
| 2 | 8.93 |
| 3 | 6.15 |
| 4 | 4.86 |
| 5 | 3.78 |
| 6 | 2.99 |
| 7 | 2.54 |
| R | 14.00 |

Super low and super high are respectively 20.6 and 1.63.

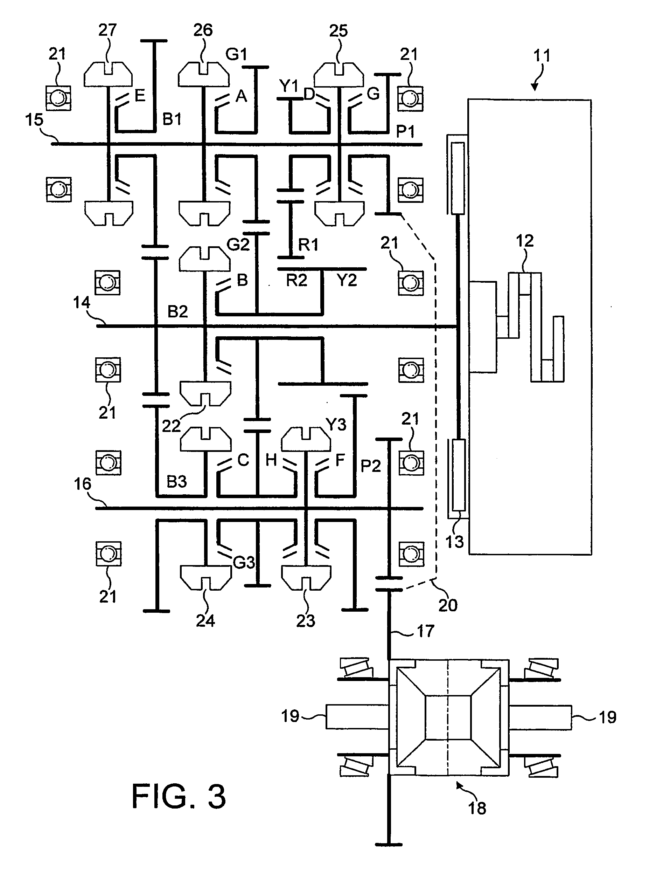

Fig. 3 illustrates an alternative six speed transmission. The arrangement corresponds closely to that of Fig. 1 except that the gear cluster comprises large gear G2, and combined gear R2, Y2 which drives respective the first layshaft via idler R1 and loose gear Y1, and the second layshaft via loose gear Y3. The use of a common gear R2, Y2 can also be applied to the seven speed transmission of the first embodiment.

A selector sequence suitable to give six forward speed ratios is as follows:

| **Speed** | **Selectors Engaged** | **Gear Pairs under Load** |
|---|---|---|
| 1 | EAF | 4 |
| 2 | BF | 2 |
| 3 | EG | 2 |
| 4 | CH | 2 |
| 5 | EAH | 4 |
| 6 | BAG | 2 |

It will be observed that selector path CAG (third speed of the first embodiment) is not used. Reverse is again provided by engaging selectors EDF. Top gear again has only two gear pairs under load.

In preferred embodiments, the six speed transmission has the following ratios:

| **Speed** | **Speed Ratio (petrol)** | **Speed Ratio (diesel)** |
|---|---|---|
| 1 | 15.52 | 13.45 |
| 2 | 8.22 | 7.12 |
| 3 | 5.56 | 4.90 |
| 4 | 4.24 | 3.67 |
| 5 | 3.45 | 2.99 |
| 6 | 2.94 | 2.59 |
| R | 14.8 | 12.82 |

As illustrated by the above table, the transmission is adaptable to both petrol and diesel engined vehicles, and further overall ratio adjustment is possible by variation of the final drive ratio.

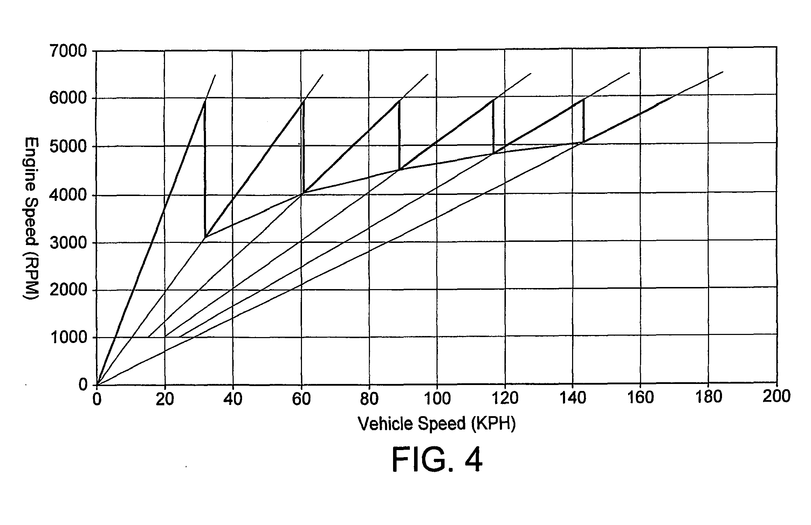

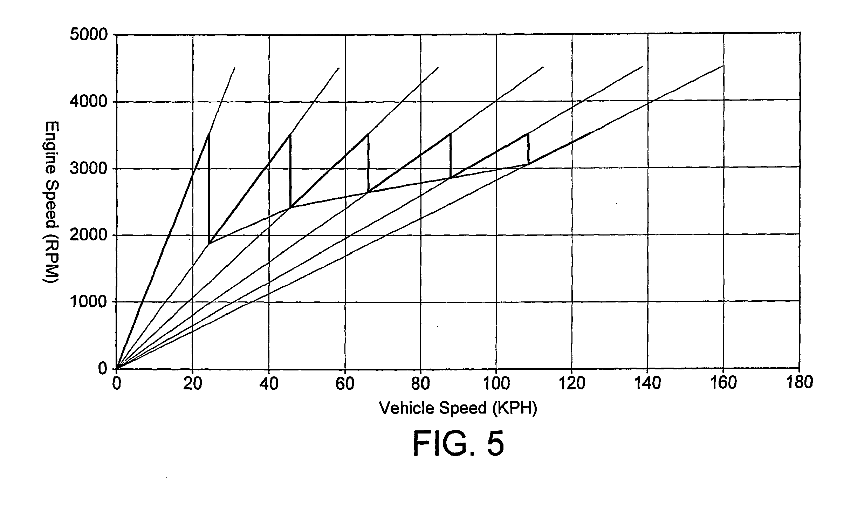

Figs. 4 and 5 show shift point graphs for petrol (Fig. 4) and diesel (Fig. 5) engined variants, and illustrate the smooth progression of ratios provided by a transmission according to the invention, with slightly increased engine speed at each upshift of the sequence.

## Claims

1. A twin layshaft gear transmission comprising an input shaft (14), twin layshafts (15, 16) parallel to the input shaft, an output member driven by said layshafts a plurality of fixed (B2, 82) and loose gears (B1, G1, Y1, P1, G2, R2, Y2, B3, G3, Y3) on the shafts (14, 15, 16), and selectors (22, 23, 24, 25, 26, 27) adapted to engage loose gears (B1, G1, Y1, P1, G2, R2, Y2, B3, G3, Y3) on demand, wherein
a) a plurality of loose gears (G2, R2, Y2) is provided on the input shaft (14), the loose gears being selectively engageable with said input shaft;
b) two loose gear (G3, P3) are provided on a second layshaft (16), each loose gear being selectively engageable with said second layshaft and meshed with a respective loose gear of said input shaft;
c) the first layshaft (15) having a loose output gear (P1), and the second layshaft (16) having a fixed output gear (P2), the output gears being adapted to drive said output member (17) and the loose output gear being selectively engageable with said first layshaft; and
**characterized by**
d) a fixed gear (B2) is provided on the input shaft (14),
e) a loose gear (G1, Y1) is provided on a first layshaft (15), selectively engageable with said first layshaft and meshed with a loose gear of said input shaft;
f) each layshaft (15, 16) having a loose transfer gear (B1, B3) connected to the fixed gear (B2) of said input shaft (14), said transfer gears (B1, B3) being selectively engageable with the respective first and second layshafts (15, 16).

2. A transmission according to claim 1 wherein the loose transfer gears (B1, B3) are selectively engageable directly with the first layshaft (15), and with a loose gear (G3) of the second layshaft.

3. A transmission according to claim 1 or claim 2 wherein the loose gears (G2, R2, Y2) of the input shaft are provided as a cluster.

4. A transmission according to claim 3 wherein said cluster comprises two or more gears, one of which drives via an idler (R1) to an additional loose gear of the first layshaft, the additional loose gear being selectively engageable with the first (Y1) layshaft to provide reverse.

5. A transmission according to claim 4 and having four single acting selectors (22, 24, 26, 27) and two double acting selectors (23, 25), one double acting selector being provided on each of said layshafts.

6. A transmission according to claim 5 wherein one (25) of said double acting selectors is movable to engage reverse ratio.

7. A transmission according to any of claims 3-6 wherein one gear (62) of the cluster drives loose gears of both layshafts.

8. A transmission according to any of claims 3-7 wherein the gears (62, R2, Y2) of the cluster are of different diameter.

9. A transmission according to any of claims 3-8 wherein a common gear (R2; Y2) of the cluster drives both forward and reverse ratios.

10. A transmission according to claim 9 wherein said common gear (R2; Y2) drives to both first and second layshafts.

11. A transmission according to any of claims 3-10 and having a three gear cluster, the smallest gear (R2) being at the centre.

12. A transmission according to claim 11 wherein the largest gear (G2) of the cluster drives two loose gears of the layshafts.

13. A transmission according to claim 11 or claim 12 wherein the smallest cluster gear (R2) is part of the reverse gear train.

14. A transmission according to any preceding claim wherein the transfer gears (B1, B3) of the layshafts are the same diameter.

15. A transmission according to claim 5 wherein said double acting selectors (23, 25) are both adjacent the layshaft output gears (P1, P2).

16. A transmission according to claim 15 wherein said single acting selectors (22, 24, 26, 27) are outboard of the double acting selectors with respect to the input end of the input shaft.

17. A transmission according to any preceding claim wherein a selector (27) of the transfer gear (B1) of the first layshaft (15) is outboard of the associated gear at the outboard end with respect to the input end of the input shaft.

18. A transmission according to any preceding claim wherein the input shaft is adapted to be on the centre line of an engine crankshaft and driven via a single dry plate clutch (13).

19. A transmission according to any preceding claim wherein the rotational axes of the layshafts (15, 16) are on a line generally orthogonal to a line between the rotational axes of the input shaft and the output member.

## Patentansprüche

1. Getriebe mit Doppelvorgelegewelle umfassend eine Eingangswelle (14), doppelte Vorgelegewellen (15, 16) parallel zur Eingangswelle, ein von den Vorgelegewellen angetriebenes Abtriebselement, eine Mehrzahl von festgelegten (B2) und losen Zahnrädern (B1, G1, Y1, P1, G2, R2, Y2, B3, G3, Y3) an den Wellen (14, 15, 16) und Selektoren (22, 23, 24, 25, 26, 27) zum Eingriff an losen Zahnrädern (B1, G1, Y1, P1, G2, R2, Y2, B3, G3, Y3) nach Bedarf, wobei
a) eine Mehrzahl von losen Zahnrädern (G2, R2, Y2) an der Eingangswelle (14) vorgesehen ist, wobei die losen Zahnräder selektiv mit der Eingangswelle in Eingriff kommen können,
b) zwei lose Zahnräder (G3, P3) auf einer zweiten Vorgelegewelle (16) vorgesehen sind, wobei jedes lose Zahnrad selektiv mit der zweiten Vorgelegewelle in Eingriff kommen kann und mit einem zugehörigen losen Zahnrad der Eingangswelle kämmt,
c) die erste Vorgelegewelle (15) ein loses Abtriebsrad (P1) und die zweite Vorgelegewelle (16) ein festgelegtes Abtriebsrad (P2) aufweist, wobei die Abtriebsräder geeignet sind, das Abtriebselement (17) anzutreiben und das lose Abtriebsrad selektiv mit der ersten Vorgelegewelle in Eingriff kommen kann und **dadurch gekennzeichnet, dass**
d) ein festgelegtes Zahnrad (B2) an der Eingangswelle (14) vorgesehen ist,
e) ein loses Zahnrad (G1, Y1) an einer ersten Vorgelegewelle (15) vorgesehen ist, selektiv mit der ersten Vorgelegewelle in Eingriff kommen kann und mit einem losen Zahnrad der Eingangswelle kämmt,
f) jede Vorgelegewelle (15, 16) ein loses Verteilerrad (B1, B3) aufweist, das mit dem festgelegten Zahnrad (B2) der Eingangswelle (14) verbunden ist, wobei die Verteilerräder (B1, B3) selektiv mit der zugehörigen ersten und zweiten Vorgelegewelle (15, 16) in Eingriff kommen können.

2. Getriebe nach Anspruch 1, wobei die losen Verteilerräder (B1, B3) mit der ersten Vorgelegewelle (15) und mit einem losen Zahnrad (G3) der zweiten Vorgelegewelle selektiv direkt in Eingriff kommen können.

3. Getriebe nach Anspruch 1 oder 2, wobei die losen Zahnräder (G2, R2, Y2) der Eingangswelle als Ritzelpaket vorgesehen sind.

4. Getriebe nach Anspruch 3, wobei das Ritzelpaket zwei oder mehr Zahnräder umfasst, von denen eines über einen Mitläufer (R1) ein zusätzliches loses Zahnrad (Y1) der ersten Vorgelegewelle antreibt, wobei das zusätzliche lose Zahnrad selektiv mit der ersten Vorgelegewelle in Eingriff kommen kann, um einen Rückwärtsgang vorzusehen.

5. Getriebe nach Anspruch 4 und mit vier einseitig wirkenden Selektoren (22, 24, 26, 27) und zwei beidseitig wirkenden Selektoren (23, 25), wobei an jeder der Vorgelegewellen ein beidseitig wirkender Selektor vorgesehen ist.

6. Getriebe nach Anspruch 5, wobei einer (25) der beidseitig wirkenden Selektoren so verschiebbar ist, dass er einen Rückwärtsgang einlegt.

7. Getriebe nach einem der Ansprüche 3 bis 6, wobei ein Zahnrad (G2) des Ritzelpakets lose Zahnräder der beiden Vorgelegewellen antreibt.

8. Getriebe nach einem der Ansprüche 3 bis 7, wobei die Zahnräder (G2, R2, Y2) des Ritzelpakets unterschiedliche Durchmesser aufweisen.

9. Getriebe nach einem der Ansprüche 3 bis 8, wobei ein gemeinsames Zahnrad (R2, Y2) des Ritzelpakets sowohl Vorwärts- wie Rückwärtsgänge antreibt.

10. Getriebe nach Anspruch 9, wobei das gemeinsame Zahnrad (R2, Y2) sowohl die erste wie die zweite Vorgelegewelle antreibt.

11. Getriebe nach einem der Ansprüche 3 bis 10 und mit einem Ritzelpaket mit drei Zahnrädern, wobei das kleinste Zahnrad (R2) in der Mitte liegt.

12. Getriebe nach Anspruch 11, wobei das größte Zahnrad (G2) des Ritzelpakets zwei lose Zahnräder der Vorgelegewellen antreibt.

13. Getriebe nach Anspruch 11 oder Anspruch 12, wobei das kleinste Zahnrad (R2) des Ritzelpakets Teil des Rückwärtsgang-Getriebestrangs ist.

14. Getriebe nach einem der vorhergehenden Ansprüche, wobei die Verteilerräder (B1, B3) der Vorgelegewellen den gleichen Durchmesser aufweisen.

15. Getriebe nach Anspruch 5, wobei die beidseitig wirkenden Selektoren (23, 25) beide an die Vorgelegewellen-Abtriebsräder (P1, P2) angrenzen.

16. Getriebe nach Anspruch 15, wobei die einseitig wirkenden Selektoren (22, 24, 26, 27) in Bezug auf das Eingangsende der Eingangswelle außerhalb der beidseitig wirkenden Selektoren liegen.

17. Getriebe nach einem der vorhergehenden Ansprüche, wobei ein Selektor (27) des Verteilerrads (B1) der ersten Vorgelegewelle (15) außerhalb des zugeordneten Zahnrads am äußeren Ende in Bezug auf das Eingangsende der Eingangswelle liegt.

18. Getriebe nach einem der vorhergehenden Ansprüche, wobei die Eingangswelle auf der Mittellinie einer Motorkurbelwelle liegen kann und von einer Einscheibentrockenkupplung (13) angetrieben wird.

19. Getriebe nach einem der vorhergehenden Ansprüche, wobei die Rotationsachsen der Vorgelegewellen (15, 16) auf einer Linie liegen, die allgemein orthogonal zu einer Linie zwischen den Rotationsachsen der Eingangswelle und des Abtriebselements liegt.

## Revendications

1. Transmission à engrenage sur arbre intermédiaire double, comprenant un arbre d'entrée (14), des arbres intermédiaires jumelés parallèles à l'arbre d'entrée, un élément de sortie entraîné par lesdits arbres intermédiaires, une pluralité d'engrenages fixes (B2) et mobiles (B1, G1, Y1 P1, G2, R2, Y2, B3, G3, Y3) sur les arbres (14, 15, 16), et des sélecteurs (22, 23, 24, 25, 26, 27) prévus pour engager les engrenages mobiles (B1, G1, Y1, P1, G2, R2, Y2, B3, G3, Y3) sur demande, dans laquelle
a) une pluralité d'engrenages mobiles (G2, R2, Y2) est montée sur l'arbre d'entrée (14), les engrenages mobiles pouvant être engagés de manière sélective avec ledit arbre d'entrée ;
b) deux engrenages mobiles (G3, P3) sont montés sur un second arbre intermédiaire (16), chaque engrenage mobile pouvant être engagé de manière sélective avec ledit second arbre intermédiaire et mis en prise avec un engrenage mobile respectif dudit arbre d'entrée ;
c) le premier arbre intermédiaire (15) comportant un engrenage mobile de sortie (P1), et le second arbre intermédiaire (16) comportant un engrenage fixe de sortie (P2), les engrenages de sortie étant prévus pour entraîner ledit élément de sortie (17) et l'engrenage mobile de sortie pouvant être engagé de manière sélective avec ledit premier arbre intermédiaire;
**caractérisée en ce que**
d) un engrenage fixe (B2) est monté sur l'arbre d'entrée (14) ;
e) un engrenage mobile (G1, Y1) est monté sur un premier arbre intermédiaire (15), pouvant être engagé de manière sélective avec ledit premier arbre intermédiaire et mis en prise avec un engrenage mobile dudit arbre d'entrée ; et
f) chaque arbre intermédiaire (15, 16) comportant un engrenage de transfert mobile (B1, B3) raccordé à l'engrenage fixe (B2) dudit arbre d'entrée (14), lesdits engrenages de transfert (B1, B3) pouvant être engagés de manière sélective avec les premier et second arbres intermédiaires respectifs (15, 16).

2. Transmission selon la revendication 1, dans laquelle les engrenages de transfert mobiles (B1, B3) peuvent être engagés de manière sélective directement avec le premier arbre intermédiaire (15), et avec un engrenage mobile (G3) du second arbre intermédiaire.

3. Transmission selon la revendication 1 ou la revendication 2, dans laquelle les engrenages mobiles (G2, R2, Y2) de l'arbre d'entrée sont montés comme un train de pignons.

4. Transmission selon la revendication 3, dans laquelle ledit train de pignons comporte deux engrenages ou plus, dont un qui entraîne un engrenage mobile supplémentaire du premier arbre intermédiaire par l'intermédiaire d'un renvoi (R1), l'engrenage mobile supplémentaire (Y1) pouvant être engagé de manière sélective avec le premier arbre intermédiaire pour la marche arrière.

5. Transmission selon la revendication 4 et comportant quatre sélecteurs actifs uniques (22, 24, 26, 27) et deux sélecteurs actifs doubles (23, 25), un sélecteur actif double étant monté sur chacun desdits arbres intermédiaires.

6. Transmission selon la revendication 5, dans laquelle un (25) desdits sélecteurs actifs doubles peut être déplacé pour engager le rapport de marche arrière.

7. Transmission selon l'une quelconque des revendications 3 à 6, dans laquelle un engrenage (G2) du train de pignons entraîne les engrenages mobiles des deux arbres intermédiaires.

8. Transmission selon l'une quelconque des revendications 3 à 7, dans laquelle les engrenages (G2, R2, Y2) du train de pignons sont de diamètre différent.

9. Transmission selon l'une quelconque des revendications 3 à 8, dans laquelle un engrenage commun (R2, Y2) du train de pignons entraîne à la fois le rapport de marche avant et celui de marche arrière.

10. Transmission selon la revendication 9, dans laquelle ledit engrenage commun (R2, Y2) entraîne à la fois le premier et le second arbre intermédiaire.

11. Transmission selon l'une quelconque des revendications 3 à 10 et comportant un train de pignons à trois engrenages, l'engrenage le plus petit (R2) étant au centre.

12. Transmission selon la revendication 11, dans laquelle l'engrenage le plus grand (G2) du train de pignons entraîne deux engrenages mobiles des arbres intermédiaires.

13. Transmission selon la revendication 11 ou la revendication 12, dans laquelle l'engrenage le plus petit (R2) du train de pignons fait partie du train d'engrenages de marche arrière.

14. Transmission selon l'une quelconque des revendications précédentes, dans laquelle les engrenages de transfert (B1, B3) des arbres intermédiaires présentent le même diamètre.

15. Transmission selon la revendication 5, dans laquelle lesdits sélecteurs actifs doubles (23, 25) sont tous deux adjacents aux engrenages de sortie d'arbre intermédiaire (P1, P2).

16. Transmission selon la revendication 15, dans laquelle lesdits sélecteurs actifs uniques (22, 24, 26, 27) sont à l'extérieur des sélecteurs actifs doubles par rapport à l'extrémité d'entrée de l'arbre d'entrée.

17. Transmission selon l'une quelconque des revendications précédentes, dans laquelle un sélecteur (27) de l'engrenage de transfert (B1) du premier arbre intermédiaire (15) est à l'extérieur de l'engrenage associé à l'extrémité extérieure par rapport à l'extrémité d'entrée de l'arbre d'entrée.

18. Transmission selon l'une quelconque des revendications précédentes, dans laquelle l'arbre d'entrée est prévu sur la ligne centrale d'un vilebrequin de moteur et entraîné par l'intermédiaire d'un embrayage monodisque sec (13).

19. Transmission selon l'une quelconque des revendications précédentes, dans laquelle les axes de rotation des arbres intermédiaires (15, 16) sont situés sur une ligne sensiblement orthogonale à une ligne se trouvant entre les axes de rotation de l'arbre d'entrée et l'élément de sortie.
